# EUROPÄISCHE PATENTSCHRIFT

(11) **EP 2 438 979 B1**
(45) Veröffentlichungstag und Bekanntmachung des Hinweises auf die Patenterteilung: **06.09.2017**
(21) Anmeldenummer: 11006195.9
(22) Anmeldetag: 27.07.2011
(51) Int. Cl.: B01F 3/04, B01J 4/00, B01J 10/00, C02F 1/78

(54) **Wassereintrag in Ozonreaktionsbecken**
Water induction in ozone reaction basins
Introduction d'eau dans des bassins de réaction d'ozone

(30) Priorität: 11.10.2010 DE 102010047880
(43) Veröffentlichungstag der Anmeldung: 11.04.2012
(73) Patentinhaber: Xylem IP Holdings LLC, White Plains, NY 10604 (US)
(72) Erfinder: Anton, Hans-Joachim, 33613 Bielefeld (DE)
(74) Vertreter: Lenzing Gerber Stute

(56) Entgegenhaltungen:
- EP-A1- 1 021 378
- EP-B1- 0 485 270
- JP-A- 8 187 493
- US-A- 4 003 832
- US-A- 4 042 510
- US-A- 4 531 456
- US-A- 5 968 352

## Beschreibung

Die vorliegende Erfindung betrifft ein Wassereintragsystem für Ozonreaktionsbecken mit den Merkmalen des Oberbegriffs des Anspruchs 1.

Bei Ozonreaktionsbecken handelt es sich um Behälter in denen mit Ozon zu behandelndes Wasser über einen Einlauf zugeführt wird. Das einlaufende Wasser wird mit gasförmigem Ozon in feiner Verteilung kontaktiert. Nach einer Verweilzeit wird das Wasser dann mit dem darin möglichst vollständig gelösten Ozon aus dem Behälter ausgeleitet. Die Behälter bei solchen Systemen sind im allgemeinen als Kammersysteme mit mehreren verbundenen Kammern ausgebildet. Die Verweilzeit ist durch das Volumen und die Fließrate bestimmt. Eine Voraussetzung für den vollständigen und gleichmäßigen Eintrag von Ozon in das Wasser besteht darin, dass sich möglichst geringe Geschwindigkeitsunterschiede innerhalb des Behälters ausbilden, damit nicht einzelne Volumina quasi statisch in dem Behälter verbleiben, während an anderer Stelle sich ein besonders schneller Strömungspfad ausbildet, dessen Volumenelemente nur eine geringe Kontaktzeit mit dem gasförmig eingetragenen Ozon haben. Bei Anlagen, die zur Desinfektion von Wasser oder Abwasser eingesetzt werden, könnten in solchen schnellen Strömungspfaden möglicherweise einzelne Mikroorganismen aufgrund zu geringer Konzentration an gelöstem Ozon überleben. Dieser Effekt ist natürlich unerwünscht.

Um die Strömung innerhalb des Behälters gleichmäßig zu gestalten, wodurch das oben beschriebene Problem gelöst werden kann, sind verschiedene Eintragsysteme vorgeschlagen worden. In dem Dokument US 4,028,246 wird vorgeschlagen, das zu behandelnde Wasser an der Oberseite vielfach unterteilten einer Kammer mit zahlreichen Eintragsvorrichtungen einzusprühen, damit die entstehenden Tropfen aufgrund ihrer großen Oberfläche viel Ozon aus der darin enthaltenden Atmosphäre aufnehmen. Diese Lösung ist für größere Wassermengen, wie sie beispielsweise in Kläranlagen anfallen, ungeeignet.

Das Dokument US 3,945,918 beschreibt eine Vorrichtung zur Ozonbehandlung von Abwasser in einem Durchlaufverfahren. Bei diesen Verfahren sind mehrere Kammern hintereinander geschaltet. Der Einlauf in die Kammern erfolgt über eine horizontale Kante, so dass der Wasserstrom über die Breite der Kammer mit konstanter Rate in die Kammer eintritt. Bei solchen Eintragsystemen zeigt sich in der Praxis, dass das Wasser über die Kante fällt und einen Strömungspfad hoher Geschwindigkeit parallel zu der unterhalb der Kante befindlichen Wandung ausbildet. In dieser genannten Druckschrift wird diesem Umstand durch eine Hintereinanderschaltung zahlreicher Kammern Rechnung getragen.

Der nächstkommende Stand der Technik ist in der Druckschrift EP 0 485 270 B1 offenbart. Dieses Dokument zeigt ein Eintragsystem für Wasser in eine Ozonbehandlungskammer mit Verteilerrinnen, die über ihre Längserstreckung eine Anzahl von kalibrierten Bohrungen aufweisen, die so bemessen sind, dass durch jede Bohrung die gleiche Flüssigkeitsmenge in die Behandlungskammer eingetragen wird. Diese Lösung ist nur für im wesentlichen konstante Zulaufmengen geeignet. Wenn die Zulaufmengen mit der Zeit schwanken, wird der Eintrag ungleichmäßig.

Es ist deshalb Aufgabe der vorliegenden Erfindung, ein Eintragsystem für Ozonreaktionsbecken zu schaffen, das auch bei schwankenden Zulaufmengen einen gleichmäßig verteilten Eintrag erzielt und dadurch die Ausbildung besonders schneller Strömungspfade verhindert. Diese Aufgabe wird von einer Vorrichtung mit den Merkmalen des Anspruchs 1 gelöst.

Weil in der Kammer wenigstens eine Zulaufrinne angeordnet ist, die über strömbare Randbereiche aufweist und weil die Randbereiche mit einer Anzahl von nach oben offenen Ausnehmungen versehen sind, wobei die Ausnehmungen sich in Horizontalrichtung von einem tiefsten Punkt nach oben erweitern, und weil der Einlauf in die wenigstens eine Zulaufrinne mündet, und unterhalb der Trennwand eine Öffnung zur Verbindung der Einlaufkammer mit der Auslaufkammer gebildet ist, kann bei geringem Wasseranfall das Wasser aus der Verteilerrinne über die schmalen unteren Bereiche der Ausnehmungen in den Behälter fließen. Der begrenzte Querschnitt dieser unteren Bereiche stellt dann sicher, dass das Wasser an mehreren Ausnehmungen austritt. Die Breite der Ausnehmungen in Horizontalrichtung erweitert sich nach oben vorzugsweise linear mit der Höhe. Dabei kann vorgesehen sein, dass die tiefsten Stellen der Ausnehmungen eine gegen Null gehende Breite aufweisen. Es kann auch vorgesehen sein, dass die Breite einen Mindestwert annimmt, der eine horizontale Unterkante der Ausnehmung darstellt. Weiter kann vorgesehen sein, dass die Ausnehmungen an ihrem unteren Ende abgerundet sind.

Jede Verteilerrinne weist vorzugsweise zwei Längsseiten auf, die bevorzugt parallel zueinander verlaufen und die jeweils eine Reihe von Ausnehmungen aufweisen. Die tiefsten Stellen der Ausnehmungen befinden sich in einer gemeinsamen Horizontalebene. Weiter ist bevorzugt, die Verteilerrinnen aus einem Edelstahlblech anzufertigen, so dass die Ausnehmungen in einfacher Weise mittels Laser oder Stanzen gebildet werden können.

Schließlich kann in einer Ausführungsform vorgesehen sein, zwischen den Ausnehmungen in den Längsseiten Bohrungen vorzusehen, die einen zusätzlichen Auslauf für die eingetragene Flüssigkeit darstellen können.

Nachfolgend werden Ausführungsbeispiele der vorliegenden Erfindung anhand der Zeichnungen näher beschrieben. Es zeigen:
- Figur 1:: Eine Prinzipdarstellung einer Behandlungskammer in einem Längsschnitt;
- Figur 2:: Eine Zulaufrinne für das Eintragsystem aus Figur 1 in einer perspektivischen Darstellung;
- Figur 3:: Vier verschiedene Ausführungsformen der Zulaufrinne aus Figur 2;
- Figur 4:: Eine schematische Darstellung einer Zulaufrinne mit möglichen Wasserständen in dem nachgeordneten Behandlungsbecken; sowie
- Figur 5:: Die Kammer aus Figur 1 in einer perspektivischen Darstellung mit insgesamt drei Zulaufrinnen.

Da die im folgenden beschriebene Vorrichtung mit Wasser arbeitet, welches sich in einer Kammer befindet und sich in dieser Kammer ein im wesentlichen horizontaler Wasserspiegel einstellt, können die Ebenen und Richtungen der folgenden Beschreibung auf eine Horizontalrichtung bezogen werden, die rechtwinklig zur Richtung der Gravitation verläuft.

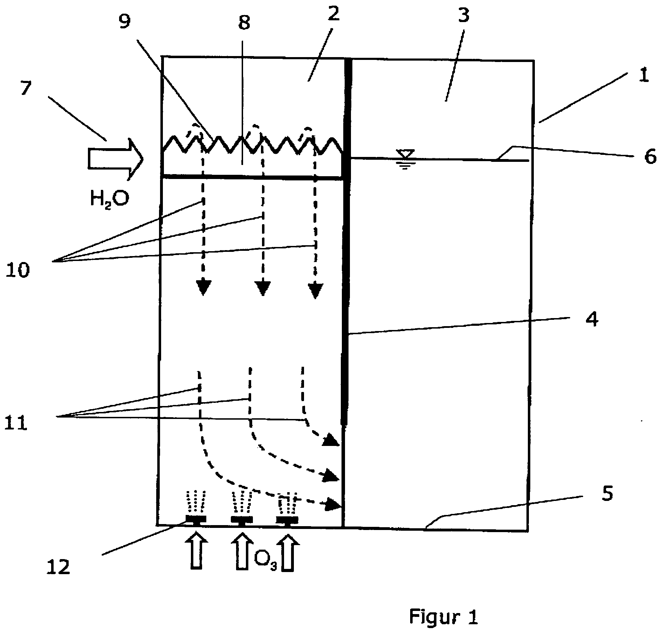

In der Figur 1 ist in einem Längsschnitt eine Vorrichtung zur Behandlung von Wasser mit einem ozonhaltigen Gas dargestellt. Die Darstellung zeigt eine Einlaufkammer 2 und eine Auslaufkammer 3, die durch eine Trennwand 4 mittig und oberhalb des Wasserspiegels voneinander getrennt sind. Die Trennwand 4 reicht nicht bis auf einen Boden 5 herab, so dass unterhalb der Trennwand 4 eine Öffnung zur Verbindung der Einlaufkammer 2 mit der Auslaufkammer 3 gebildet ist. Ein Wasserspiegel 6, der sich im Betrieb der Kammer einstellt, ist durch die Höhe eines nicht dargestellten Auslaufs konstruktiv bestimmt. Ein Einlauf ist mit der Bezugsziffer 7 bezeichnet. Der Einlauf 7 mündet in eine Zulaufrinne 8, die einen zackenförmigen Rand 9 aufweist. Das einlaufende Wasser tritt über den Rand 9 der Zulaufrinne 8 und fällt dann in parallelen Strompfaden 10 in Richtung auf den Boden 5. Die Strompfade treten dann unterhalb der Trennwand 4 in die Auslaufkammer 3, was mit den Linien 11 veranschaulicht ist. Am Boden 5 der Einlaufkammer 2 ist eine Eindüsung 12 für Ozon vorgesehen. Das Ozon wird in freien verteilten Blasen in die Einlaufkammer 2 eingespeist und steigt dort nach oben. Die Kontaktierung zwischen dem Ozon und dem eingetragenen Wasser erfolgt also im Gegenstrom.

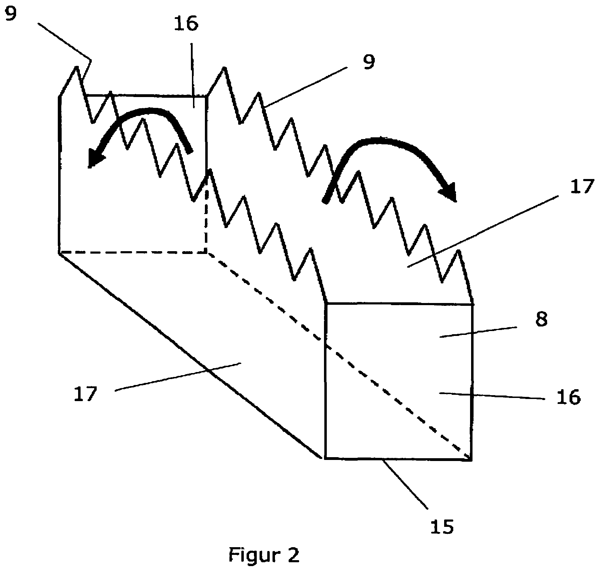

Die Figur 2 zeigt die Zulaufrinne 8 in einer schematischen perspektivischen Darstellung. Die Zulaufrinne 8 weist einen Boden 15 auf, der die Zulaufrinne 8 nach unten verschließt. Zwei kurze Seitenwände 16 und zwei sich gegenüberliegende lange Seitenwände 17 bilden die Wandung der nach oben offenen Zulaufrinne 8, deren Innenraum etwa quaderförmig ist. Die Ränder 9 der beiden Seitenwände 17 sind baugleich und weisen eine Anzahl von dreieckigen, nach oben weisenden Zacken auf, zwischen denen sich dreiecksförmige Ausnehmungen befinden. Der Boden 15 der Zulaufrinne 8 ist im Betrieb horizontal angeordnet. Entsprechend liegen auch die oberen Spitzen der Ränder 9 in einer gemeinsamen horizontalen Ebene. Diese horizontale Ausrichtung bewirkt, dass in die Zulaufrinne 8 einlaufendes Wasser den Innenraum zwischen den Seitenwänden 16 und 17 zunächst füllt und dann im Bereich der Ränder 9 über alle Ausnehmungen gleichzeitig aus der Zulaufrinne 8 austritt.

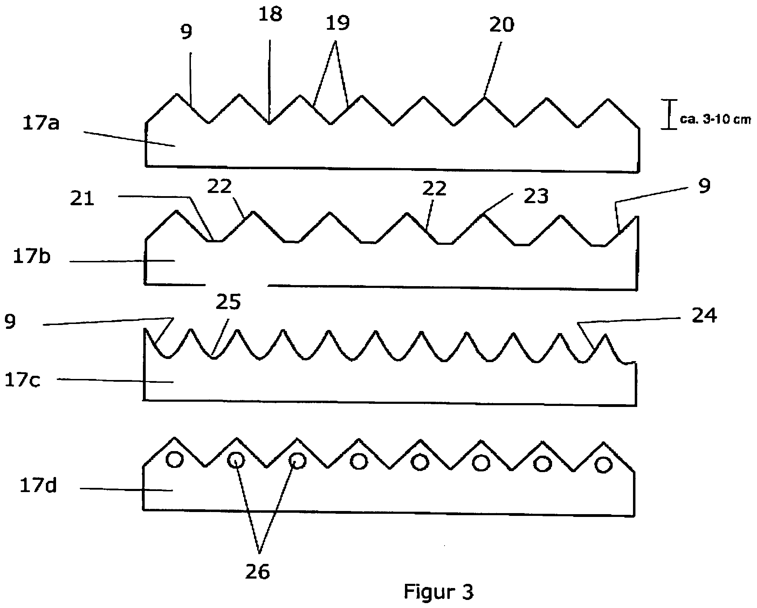

Die Figur 3 zeigt andere mögliche Gestaltungen der Seitenwände 17. Eine erste Seitenwand 17 a weist nach oben zum Rand 9 hin eine Folge von dreieckigen Ausnehmungen und dreieckigen nach oben weisenden Vorsprüngen auf. Die Ausnehmungen weisen an ihrer im Betrieb tiefsten Stelle 18 einen rechten Winkel auf. An den Winkel 18 schließen nach oben Kanten 19 der Ausnehmungen an, die gerade in einem Winkel von 45 Grad gegenüber der Horizontalen bis zu einem Scheitelpunkt 20 verlaufen. Die Höhe der Ausnehmungen in Vertikalrichtung beträgt 3 bis 10 Zentimeter je nach geplanter zulaufender Menge des einströmenden Wassers.

Eine weitere Gestaltung der Seitenwand ist mit 17 b gekennzeichnet. Hier ist der Rand 9 an seiner tiefsten Stelle mit einem horizontalen Abschnitt 21 versehen. An den Abschnitt 21 schließen sich wiederum im Winkel von 45 Grad gegen die Horizontale ansteigende Kanten 22 an, die sich in einem Scheitelpunkt 23 treffen. Die Kanten 22 sind wie im Fall der Seitenwand 17 a gerade.

Eine Seitenwand 17 c weist eine andere Gestaltung des Randes 9 mit etwa parabelförmigen, nach oben weisenden Ausnehmungen 24 auf. Der Rand 9 weist im Betrieb unten angeordnete tiefste Punkte 25 auf, die bei diesem Ausführungsbeispiel gerundet sind. Die Flanken der Ausnehmungen steigen von dem Punkt 25 aus mit zunehmender Steigung an.

Die Seitenwand 17 d ist schließlich so aufgebaut wie die Seitenwand 17 a, jedoch sind zusätzlich in den sägezahnartigen, nach oben weisenden Vorsprüngen zwischen den Ausnehmungen zusätzlich Bohrungen 26 vorgesehen, die eine Anzahl von zusätzlichen Überlaufstellen für das in die Zulaufrinne 8 eingeleitete Wasser darstellen.

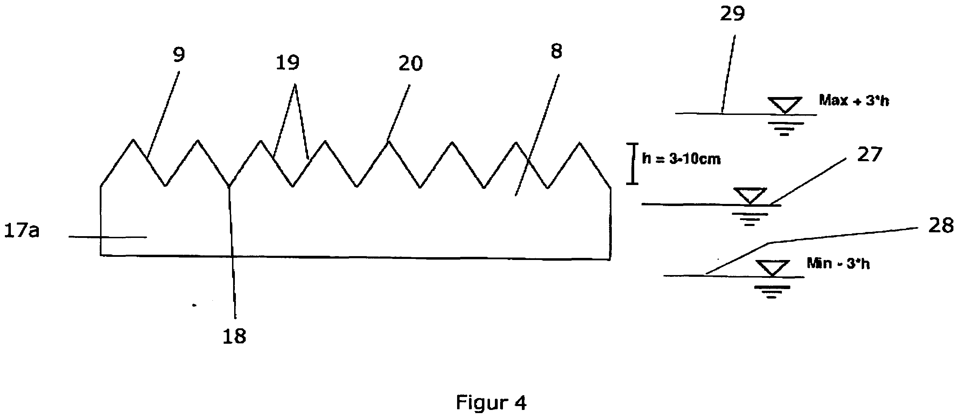

Die Figur 4 zeigt die Seitenwand 17 a in einer vergrößerten Darstellung. Neben der Seitenwand 17 a sind verschiedene Wasserpegel veranschaulicht, die sich in der Kammer 1 einstellen können. Ein normaler Wasserpegel 27 liegt knapp unterhalb der tiefsten Punkte 18 der Seitenwand 17 a, so dass in die Zulaufrinne 8 einlaufendes Wasser zunächst bis über den Pegel 27 steigt und dann im Bereich der tiefsten Punkte 18 frei bis auf den Wasserspiegel mit dem Pegel 27 herab fällt. Bei besonders geringem Zulauf kann sich ein minimaler Wasserpegel 28 in der Kammer 1 einstellen. In diesem Fall wird die Fallhöhe von den tiefsten Punkten 18 der Zulaufrinne 8 bis zu der Wasseroberfläche mit dem Pegel 28 größer. Es ist vorgesehen, dass die Auslaufkammer 3 konstruktiv so ausgebildet ist, dass die Höhendifferenz zwischen dem Pegel 27 und dem minimalen Pegel 28 nicht mehr als das Dreifache der Höhe des gezackten Randes 9 der Seitenwand 17 a beträgt.

Andererseits kann bei großen zulaufenden Wassermengen der Pegel in der Kammer 1 bis zu einem maximalen Pegel 29 ansteigen. Dieser Pegel 29 kann oberhalb des Randes 9 der Zulaufrinne 8 liegen. Selbst in diesem Betriebszustand ist durch die Gestaltung des Randes 9 (auch in den Varianten, die in der Figur 3 veranschaulicht sind) ein gleichmäßiger Zulauf in die Zulaufkammer 2 gewährleistet.

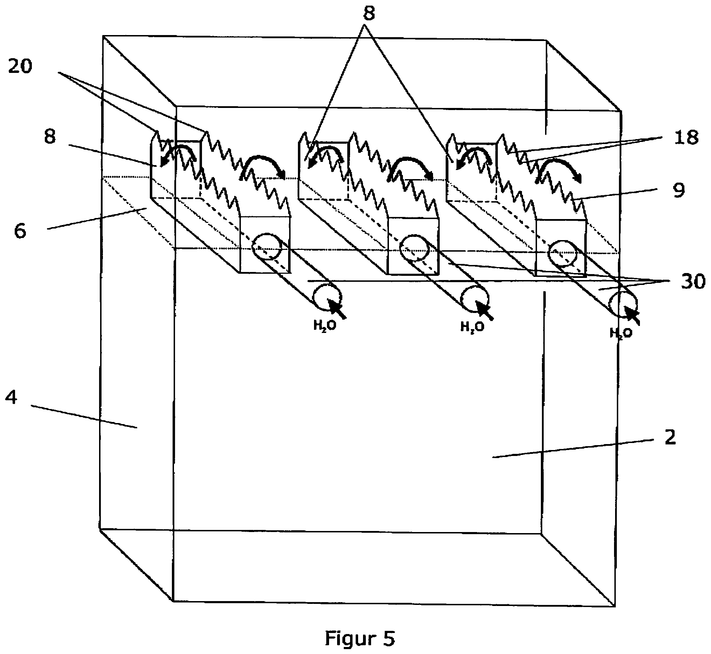

Die Figur 5 zeigt schließlich eine Zulaufkammer 2 mit insgesamt drei Rohrleitungen 30, die in drei baugleiche, horizontal angeordnete Zulaufrinnen 8 münden. Die Zulaufrinnen 8 sind auf gleicher Höhe bezüglich des Wasserspiegels 6 angeordnet. Die Ränder 9 liegen oberhalb des Wasserspiegels 6. Die tiefsten Punkte 18 und die höchsten Punkte 20 der Ränder 9 liegen jeweils in einer gemeinsamen Ebene, die parallel zu dem Wasserspiegel 6 liegt. In die Rohrleitungen 30 eingespeistes Wasser füllt im Betrieb zunächst die Zulaufrinnen 8, bis die Höhe der tiefsten Punkte 18 erreicht ist. Dann läuft das eingespeiste Wasser an allen tiefsten Punkten 18 über den Rand 9 in die Zulaufkammer 2, so dass sich dort eine gleichmäßige Abwärtsbewegung im wesentlichen über den gesamten horizontalen Querschnitt der Zulaufkammer 2 einstellt. Von unten wird wie in Figur 1 dargestellt, Ozon eingespeist, welches im wesentlichen mit jedem Volumenelement dieser Abwärtsströmung die gleiche Kontaktzeit erhält und deswegen vollständig und gleichmäßig absorbiert werden kann. Die Abwärtsströmung wird dann unterhalb der Trennwand 4 in die Auslaufkammer 3 geleitet, wo sich dann in der Figur 1 eine Aufwärtsströmung einstellt, die eine weitere Verweilzeit für das mit Ozon in Kontakt gebrachte Wasser bietet.

Die übrigen Vorkehrungen, beispielsweise die Art und Weise des Ozoneintrags sowie eine mögliche Entfernung von nicht gelöstem Restgas sind aus dem Stand der Technik bekannt.

Die insoweit beschriebene Gestaltung der Zulaufrinne 8 hat in der Praxis den Vorteil, dass schon bei sehr geringen zulaufenden Volumenströmen der Überlauf im Bereich der tiefsten Punkte 18 über die gesamte Oberfläche der Zulaufkammer 2 verteilt ist und dass mit steigendem zulaufendem Volumen der Pegel in den Zulaufrinnen 8 nicht linear mit dem Volumenstrom ansteigt, da sich der freie Querschnitt der Ausnehmungen, die der Rand 9 bildet, nicht linear, sondern beispielsweise quadratisch vergrößert. Eine Vervierfachung des Volumenstroms würde dann bei der Ausführungsform gemäß Figur 5 nur ein Ansteigen des Wasserspiegels innerhalb der Zulaufrinnen 8 um einen Faktor 2 gemessen ab den tiefsten Punkten 18 bedeuten.

Durch die beschriebene technische Lösung wird also auch bei variierenden Zulaufströmen ein über die Fläche gleichmäßiger Eintrag in die Zulaufkammer 2 gewährleistet, was Voraussetzung für eine gleichförmige Kontaktierung des Wassers mit dem eingetragenen Ozon ist.

## Patentansprüche

1. Vorrichtung zur Behandlung von Wasser mit einem ozonhaltigen Gas,
mit einer Einlaufkammer (2) und einer Auslaufkammer (3), die mittels
einer Trennwand (4) voneinander getrennt sind, wobei die Trennwand (4) nicht bis auf einen Boden (5) herab reicht, so dass unterhalb der Trennwand (4) eine Öffnung zur Verbindung der Einlaufkammer (2) mit der Auslaufkammer (3) gebildet ist, mit einem Einlauf (7), der in wenigstens eine Zulaufrinne (8) mündet, die in der Einlaufkammer (2) angeordnet ist,
und einem Auslauf, sowie mit einer Eindüsung (12) für das ozonhaltige Gas, die am Boden (5) der Einlaufkammer (2) vorgesehen ist, **dadurch gekennzeichnet, dass** die wenigstens eine Zulaufrinne (8) überströmbare, bezüglich eines Wasserspiegels (6) im wesentlichen horizontal angeordnete Randbereiche (9) aufweist, die mit einer Anzahl von nebeneinander angeordneten, nach oben offenen Ausnehmungen versehen sind, wobei die Ausnehmungen sich von einem unteren tiefsten Punkt (18) nach oben in einer Parallelrichtung zu dem Wasserspiegel (6) erweitern.

2. Vorrichtung nach Anspruch 1, **dadurch gekennzeichnet, dass** die Zulaufrinne (8) einen Boden (5), zwei kurze Seitenwände (16) und zwei lange Seitenwände (17) aufweist, wobei die Ausnehmungen in den oberen Rändern (9) der Seitenwände (17) angeordnet sind.

3. Vorrichtung nach einem der vorhergehenden Ansprüche,
**dadurch gekennzeichnet, dass** die Breite der Ausnehmungen in Horizontalrichtung nach oben vorzugsweise linear mit der Höhe zunimmt.

4. Vorrichtung nach einem der vorhergehenden Ansprüche,
**dadurch gekennzeichnet, dass** die in Vertikalrichtung tiefsten Stellen (18) der Ausnehmungen eine gegen Null gehende Breite aufweisen.

5. Vorrichtung nach einem der vorhergehenden Ansprüche,
**dadurch gekennzei**c**hnet**, dass die Breite der Ausnehmungen an der tiefsten Stelle einen Mindestwert annimmt, der eine horizontale Unterkante (21) der Ausnehmung darstellt.

6. Vorrichtung nach einem der vorhergehenden Ansprüche,
**dadurch gekennzei**c**hnet**, dass die Ausnehmungen an ihrem unteren Ende (25) abgerundet sind.

7. Vorrichtung nach einem der vorhergehenden Ansprüche,
**dadurch gekennzeichnet, dass** mehrere Zulaufrinnen (8) vorgesehen sind, wobei jede Zulaufrinne (8) zwei parallele Längsseiten (17) auf, die jeweils eine Reihe von Ausnehmungen aufweisen.

8. Vorrichtung nach einem der vorhergehenden Ansprüche,
**dadurch gekennzei**c**hnet**, dass die tiefsten Stellen (18, 21, 25) der Ausnehmungen sich in einer gemeinsamen Horizontalebene befinden.

9. Vorrichtung nach einem der vorhergehenden Ansprüche,
**dadurch gekennzeichnet, dass** die Zulaufrinnen (8) aus einem Edelstahlblech gefertigt sind.

10. Vorrichtung nach einem der vorhergehenden Ansprüche,
**dadurch gekennzeichnet, dass** zwischen den Ausnehmungen in den Seitenwänden (17) Bohrungen (26) vorgesehen sind.

## Claims

1. Device for treating water with an ozone-containing gas, with an inflow chamber (2) and an outflow chamber (3), which are separated from one another by means of a partition (4), wherein the partition (4) does not extend down to a floor (5), so that underneath the partition (4) an opening is formed for connecting the inflow chamber (2) to the outflow chamber (3), with an inflow (7), which opens out into at least one feed channel (8), which is arranged in the inflow chamber (2), and an outflow, and also with an injection means (12) for the ozone-containing gas, which is provided on the floor (5) of the inflow chamber (2), **characterised in that** the at least one feed channel (8) has substantially horizontally arranged edge regions (9) that can be overflowed with regard to a water level (6), which edge region are provided with a number of adjacently arranged, upwardly open recesses, wherein the recesses broaden out from a bottom lowest point (18) upwardly in a parallel direction to the water level (6).

2. Device according to Claim 1, **characterised in that** the feed channel (8) comprises a floor (5), two short side walls (16) and two long side walls (17), wherein the recesses are arranged in the upper edges (9) of the side walls (17).

3. Device according to any one of the preceding claims, **characterised in that** the width of the recesses in the horizontal direction upwards increases preferably lineally with the height.

4. Device according to any one of the preceding claims, **characterised in that** the lowest points (18) of the recesses in the vertical direction have a width tending to zero.

5. Device according to any one of the preceding claims, **characterised in that** the width of the recesses at the lowest point adopts a minimum value that forms a horizontal lower edge (21) of the recess.

6. Device according to any one of the preceding claims, **characterised in that** the recesses are rounded off at their lower end (25).

7. Device according to any one of the preceding claims, **characterised in that** multiple feed channels (8) are provided, wherein each feed channel (8) has two parallel longitudinal sides (17) that respectively comprise a row of recesses.

8. Device according to any one of the preceding claims, **characterised in that** the lowest points (18, 21, 25) of the recesses are located in a common horizontal plane.

9. Device according to any one of the preceding claims, **characterised in that** the feed channels (8) are made of stainless steel sheet.

10. Device according to any one of the preceding claims, **characterised in that** holes (26) are provided between the recesses in the side walls (17).

## Revendications

1. Dispositif pour le traitement de l'eau avec un gaz contenant de l'ozone, avec une chambre d'entrée (2) et une chambre de sortie (3) qui sont séparées entre elles à l'aide d'une cloison (4), auquel cas la cloison (4) ne s'étend pas vers le bas jusqu'au fond (5) en formant ainsi, au-dessous de la cloison (4), une ouverture pour relier la chambre d'entrée (2) à la chambre de sortie (3), avec une entrée (7) qui débouche dans au moins une rigole d'amenée (8) qui est agencée dans la chambre d'entrée (2), et une sortie, aussi bien avec une injection (12) pour le gaz contenant de l'ozone, qui est prévue au niveau du fond (5) de la chambre d'entrée (2), **caractérisé en ce que** la au moins une rigole d'amenée (8) présente des zones marginales inondables qui sont agencées essentiellement de manière horizontale par rapport à la surface de l'eau (6), ces zones marginales étant pourvues d'un nombre d'évidements agencés côte à côte et ouverts vers le haut, auquel cas les évidements s'élargissent à partir d'un point inférieur le plus bas (18) vers le haut dans une direction parallèle par rapport à la surface de l'eau (6).

2. Dispositif selon la revendication 1, **caractérisé en ce que** la rigole d'amenée (8) présente un fond (5), deux parois latérales courtes (16) et deux parois latérales longues (17), auquel cas les évidements sont agencés dans les bords supérieurs (9) des parois latérales (17).

3. Dispositif selon l'une quelconque des revendications précédentes, **caractérisé en ce que** la largeur des évidements en direction horizontale augmente vers le haut de préférence linéairement avec la hauteur.

4. Dispositif selon l'une quelconque des revendications précédentes, **caractérisé en ce que**, en direction verticale, les emplacements les plus bas (18) des évidements présentent une largeur s'approchant de zéro.

5. Dispositif selon l'une quelconque des revendications précédentes, **caractérisé en ce que** la largeur des évidements atteint à l'emplacement le plus bas une valeur minimale qui représente un rebord inférieur horizontal (21) de l'évidement.

6. Dispositif selon l'une quelconque des revendications précédentes, **caractérisé en ce que** les évidements sont arrondis au niveau de leur extrémité inférieure (25).

7. Dispositif selon l'une quelconque des revendications précédentes, **caractérisé en ce que** l'on prévoit plusieurs rigoles d'amenée (8), auquel cas chaque rigole d'amenée (8) présente deux côtés longitudinaux (17) qui présentent chacun une rangée d'évidements.

8. Dispositif selon l'une quelconque des revendications précédentes, **caractérisé en ce que** les emplacements les plus profonds (18, 21, 25) des évidements se trouvent dans un plan horizontal commun.

9. Dispositif selon l'une quelconque des revendications précédentes, **caractérisé en ce que** les rigoles d'amenée (8) sont constituées en une tôle d' acier.

10. Dispositif selon l'une quelconque des revendications précédentes, **caractérisé en ce que** l'on prévoit des perçages (26) entre les évidements dans les parois latérales (17).
